# EUROPEAN PATENT APPLICATION

(11) **EP 3 503 011 A1**
(43) Date of publication of application: **26.06.2019**
(21) Application number: 17210177.6
(22) Date of filing: 22.12.2017
(51) Int. Cl.: G06Q 40/02, G06Q 20/40, G06F 17/30

(54) **DATA ANALYTICS ENGINE**

(71) Applicant: Mastercard International Incorporated, Purchase NY 10577 (US)
(72) Inventor: LYNCH, Richard, Dublin (IE)
(74) Representative: Gill Jennings & Every LLP

(57) **Abstract**

A system is disclosed for combining data stored in different transactional databases 16, 34, 36, 42. The first database 16 stores various details regarding a transaction such as currency, primary account number (PAN), date and transaction amount. A risk based decisioning (RBD) database 34 can include additional information relating to the same transaction such as address and billing address. A cloning agent 24 creates a partial copy of the first database 16. A combining node 26 then cleans the data and combines data in the first database 16 with data in the RBD database 34, a CEM database 36 and/or other databases 42 in order to create a third transactional database which contains combined data. The third transactional database includes data fields that cannot be found in any one of the other databases 16, 34, 36, 42.

## Description

### TECHNICAL FIELD

The present invention relates to a method and computer system for providing enhanced analysis of transactional data.

### BACKGROUND

In a communications system it is possible that a single request message transmitted over the network is processed at multiple points or in different contexts in the network, and the results of processing at those multiple points or contexts may be written to multiple, independent, databases.

For example, in the context of electronic payment transactions, a payment authorisation request may undergo regular processing by the payment network and other entities including the cardholder's bank, and in some cases may, in parallel, also be subject to additional processing (for example, to detect whether the transaction is fraudulent). Accordingly, for a certain subset of transactions, data relating to the same transaction may be written to different databases by different services or computer systems, and the information content of the records stored in the respective databases will generally differ. These databases are generally independent of one another, which can create a technical challenge for any deep analysis of the underlying data.

### SUMMARY

According to an aspect of the present invention there is provided a method for enhancing analysis of transactional data, comprising the steps of: processing first data relating to a transaction, and associated with a primary account number, PAN, and storing the first data in a first transactional database which is a live database; processing second data relating to the transaction, and associated with the primary account number, PAN, and storing the second data in a second transactional database; creating at least a partial copy of the first transactional database; and combining at least part of the second transactional database and the at least partial copy of the first transactional databases to create a third transactional database which includes first and second data from the first and second transactional databases.

In this way, data generated by different services or computer systems conducting different processing of the same transaction can be grouped in a common database, which can allow enhanced analysis of the transactions. By creating at least a partial copy of the first transactional database it is possible to minimise disruption to normal operation of the first transactional database. Efficient operation of the first transactional database may be of critical importance, and therefore the copying of data can ensure that the first transactional database is not negatively impacted during the combination process.

Preferably the method comprises the step of identifying periods of high activity and low activity in the first transactional database. Activity may be measured in the first transactional database according to the number of transactions per second, or the number of transactions per hour.

The step of creating the at least partial copy of the first transactional database may be undertaken during a period of low activity. This can improve technical operation of the first transactional database by ensuring that there are no interactions with the database during periods of high activity. This can ensure reliable operation of the first transactional database during these critically important periods. Periods of low activity may occur at night and at certain times of the week or the year, for example.

In some embodiments the transaction is an online transaction. In particular, the transaction may be an online transaction executed in an online domain associated with a third party, where the online domain comprises an instruction for the second data to be processed. Certain online transactions may be executed in a third party's online domain, such as a merchant's website. The merchant's website may store an instruction, such as a code, which identifies the transaction as a second type of transaction. The instruction may then extract relevant data for storage in the second transactional database.

The second financial database may be a risk based decisioning, RBD, database or a customer exposure monitoring, CEM, database. The second transactional database preferably includes data fields not present in the first transactional database. Thus, by merging or combining the first and second transactional databases it may be possible to enhance the richness of data. The second transactional database may include data fields such as street address and billing address, which are not present in the first transactional database.

The method may comprise a step of cleaning the first or second transactional database before combining to remove data. In this way, unnecessary or undesirable data can be stripped out of the first or second transactional databases to reduce the processing requirement of combining the databases. This may improve the computational efficiency of the system. Thus, the entire second transactional database, or only a portion thereof, may be combined with the first transactional database to create the third transactional database.

The method may also comprise the step of cleaning the third transactional database to remove data. This may be undertaken whether or not the first and second transactional databases are pre-cleaned. This may reduce the storage requirements for the third transactional database and to ensure that only relevant data are stored.

The step of creating at least a partial copy of the first transactional database may involve copying data relating to transactions after a predetermined date. This may ensure that the partial copy comprises all relevant data after a particular calendar date. It may also ensure that the partial copy is a manageable size and can be handled with computational efficiency.

The partial copy of the first transactional database may be updated to include newly generated data. Thus, the partial copy may be updated to include transactions that have taken place since the original partial copy was created.

According to another aspect of the present invention there is provided a computer system for enhancing analysis of transactional data, the computer system comprising: a first data handling system configured to process data relating to a first type of financial transaction, and associated with a primary account number, PAN, and to store the data in a first transactional database; a second data handling system configured to process data relating to a second type of financial transaction, and associated with a primary account number, PAN, and to store the data in a second transactional database; a cloning agent configured to create at least a partial copy of the first transactional database; and a combining node configured to combine data from at least part of the second transactional database and the at least partial copy of the first transactional databases to create a third transactional database which includes data from the first and second transactional databases.

According to yet another aspect of the present invention there is provided a computer readable storage medium configured to store computer executable code that when executed by a computer configures the computer to: process first data relating to a first type of financial transaction, and associated with a primary account number, PAN, and to store the first data in a first transactional database; process second data relating to a second type of financial transaction, and associated with a primary account number, PAN, and to store the second data in a second transactional database; create at least a partial copy of the first transactional database; and combine at least part of the second transactional database and the at least partial copy of the first transactional databases to create a third transactional database which includes first and second data from the first and second transactional databases.

Apparatus features may be provided as method features and *vice-versa.*

### DETAILED DESCRIPTION

Embodiments of the present invention will now be described, by way of example, with reference to the accompanying drawings in which:
Figure 1 is a schematic view of a networked architecture for a transaction system;
Figure 2 is a schematic view of a cloning agent and combining node in an embodiment of the present invention for combining data between first and second transactional databases;
Figure 3 shows, in schematic form, components of a cloning agent of certain embodiments;
Figure 4 is an exemplary architecture of a combining node of certain embodiments; and
Figure 5 is a flow diagram showing steps that can be undertaken in an embodiment of the present invention.

Although the following discussion relates to transactions processed in an electronic payments network, it will be appreciated that the invention is also applicable in other contexts in which a single request message transmitted over a network is processed at multiple points in the network, and where the results of processing at those multiple points are written to multiple, independent, databases.

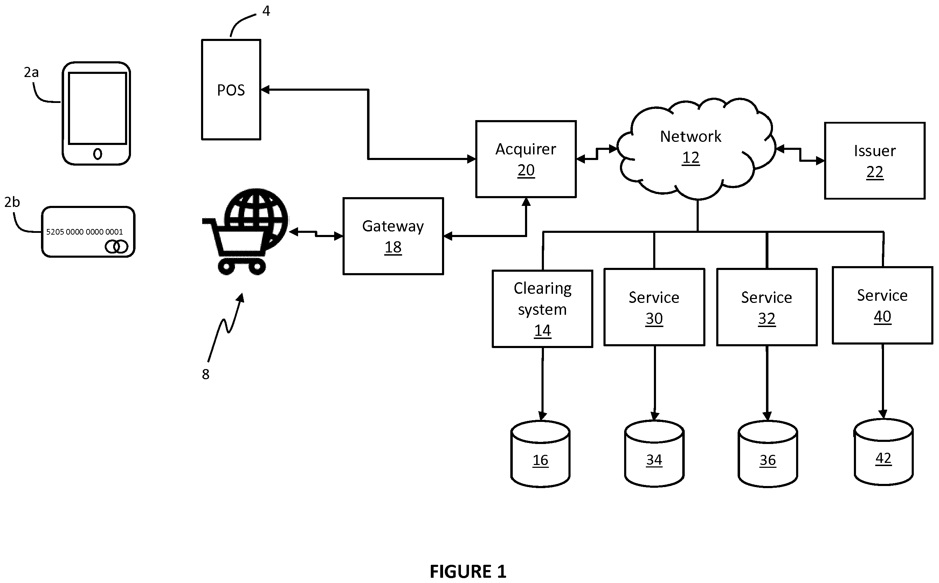

Figure 1 shows a networked architecture for a transaction system. A user's payment device, such as a payment-enabled smartphone 2a or credit card 2b, can be used in transactions at a point-of-sale terminal 4 or a merchant's website 8. The point of sale device 4 communicates over a network connection, which may be wired or wireless, with an acquirer processor system 20 of the merchant's acquirer in order to request authorisation of a transaction.

The acquirer processor system 20 forwards the request to a payment network 12, such as Mastercard, which in turn forwards the request to an issuer processor system 22 of an issuer of a payment credential (typically a primary account number, PAN) stored on the user's payment device 2a or 2b. In the case of a payment-enabled computing device such as smartphone 2a, the user's payment credentials are typically stored in "tokenised" form, i.e. replaced by a surrogate value called a token, which mimics the format of a real account number and is thus interpretable by acceptance devices which are compliant with payment industry standards (or de facto standards) such as ISO 8583 and the EMV specifications. The token is mapped to the real account number in a token vault maintained by a tokenisation service (not shown), such that when a payment authorisation request containing a token is received at the network 12, the network 12 invokes the tokenisation service to retrieve the real account number in order to progress the transaction.

The issuer processor system 22 checks that the user's account is in good standing and has sufficient funds for the transaction to be completed, and may also conduct various other checks based on the data in the authorisation request message. After the request is processed, the result of the processing is returned to acquirer processing system 20 via network 12, and then back to the point of sale device 4 to complete the transaction. In the case of a "card not present" transaction conducted via the merchant's website 8, the request is forwarded to a payment gateway 18 which subsequently forwards it to the acquirer processing system 20, with the remainder of the authorisation process being carried out in substantially identical fashion to that for a transaction carried out at point of sale device 4.

The network 12 is in communication with a clearing system 14, such as Global Clearing Management System (GCMS) of Mastercard™. The clearing system 14 is configured to receive data from completed transactions and, among other things, to store transaction records in a first database 16, sometimes referred to as a 'processed transactions' database. All transactions conducted over the network 12 are stored in the first database 16.

In some instances, additional services (depicted as 30, 32 and 40 in Figure 1) may be invoked during the authorisation process by the acquirer processing system 20 and/or the network 12 and/or the issuer processing system 22. Such services may include account control services such as Mastercard In Control, or fraud monitoring or prevention services such as Mastercard's Risk Based Decisioning (RBD) service (as described in US Patent No. 9,600,819). The result of processing by an additional service may be to modify the authorisation request message before it is passed back to the network 12 or issuer processing system 22 for further processing (e.g., to approve or decline the authorisation request based on the added information). In addition, each such service 30, 32, 40 may write a transaction record for each authorisation request that is processed by it, to a corresponding database 34, 36, 42. Such a transaction record will include one or more data fields instead of, or in addition to, those stored as part of transaction records in the processed transactions database 16. Accordingly, a subset of the transactions processed over the network 12 and stored in processed transactions database 16 will also have a corresponding record stored in database 34 and/or 36 and/or 42, but with different information content.

For example, a merchant website 8 may have risk based decisioning (RBD) code 10 provided as an optional feature. The RBD code 10 instructs the merchant's website 8 to obtain and transmit data regarding the transaction for use by RBD service 30 with the results of processing subsequently being stored in a RBD database 34. The data stored in the RBD database 34 includes the primary account number (PAN) (the number on the face of the card in the case of a physical card, otherwise a token or virtual card number), and may include date, currency and transaction amount to mirror the data stored in the first database 16. The RBD database 34 includes further data fields, not present in the first database 16, such as street address, billing address and computer operating system. The transactional data can be transmitted to the RBD database 34 in various ways; it may be transmitted directly by the merchant's website 8, by RBD service 30, or else the website 8 may send the data to the network 12 or the clearing system 14, which can process and re-route the data to the RBD database 34.

Another example of a service which can be invoked by network 12 is a customer exposure monitoring (CEM) service 32 which intercepts authorisation requests and identifies abnormal and/or risky dual message authorisation and single message activity. The CEM service may write transaction records containing the PAN and date of the transaction, together with the result of any analysis or processing, to a customer exposure monitoring (CEM) database 36 to store augmented transaction information.

In another example, a fraud detection service 40 may receive the authorisation request message, or at least some of the data contained in the authorisation request message, apply one or more fraud detection algorithms to the data, and write the PAN and date of the transaction, and the results of the fraud detection algorithms, to a record in database 42.

The data relating to a single transaction can thus be spread between a variety of databases, including the first database 16, otherwise known as a processed transactions database, the RBD database 34, the CEM database 36, and possibly further databases such as fraud detection database 42. These databases have generally existed entirely separately from one another, obstructing any effort to mine data and perform revealing analyses.

The processed transactions database 16 is a live database. During operation of a payment network 12, it is typical for tens or hundreds of transactions to be processed per second. As such, processed transactions database 16 is constantly being written to by the clearing service 14. Each transaction record stored in processed transactions database 16 may comprise dozens of fields, including a transaction identifier, a merchant identifier (MID), the primary account number (PAN), date, currency, transaction amount, and cardholder verification method (a value indicative of PIN, signature, or biometric authentication, for example).

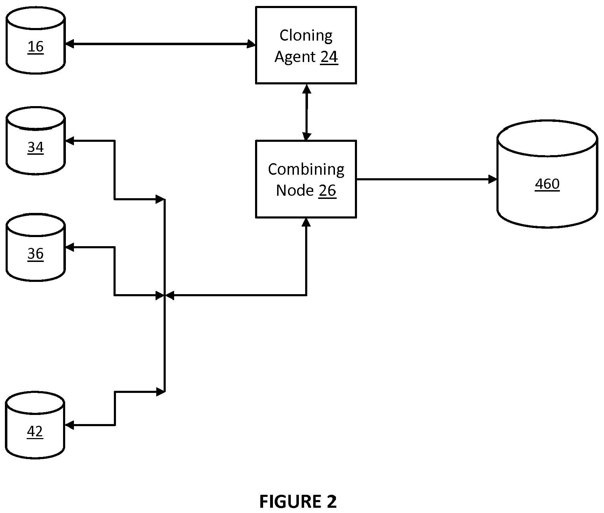

Figure 2 is a schematic view of a back-end processing system 200 for operating on the various databases 16, 34, 36, 42. A cloning agent 24 is provided in connection with the first database 16, and a combining node 26 is provided in connection with the cloning agent 24, the RDB database 34, the CEM database 36 and the other databases 42.

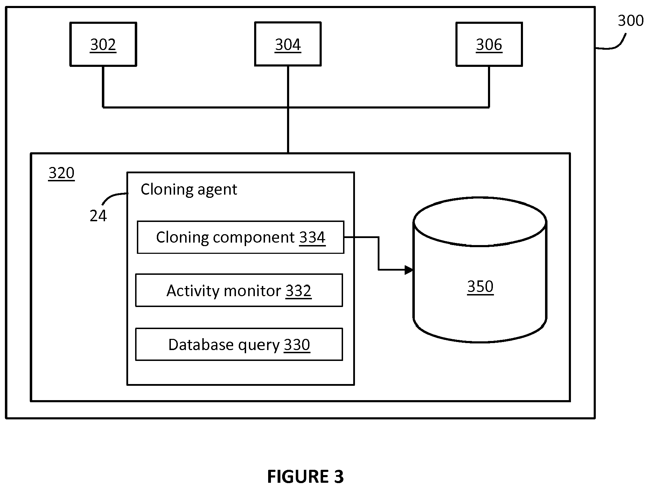

An example of a cloning agent 24 is shown in more detail in Figure 3, as part of a computing system 300. As shown, the cloning agent 24 comprises a number of software components.

External database query component 330 is configured to make appropriate queries to the first database 16. Activity monitor 332 monitors activity of the first database 16 to determine whether, and when, it is appropriate to commence a cloning (or partial cloning) operation. Cloning component 334 is configured to produce at least partial copies of the first database 16 and to write them to temporary database 350.

Typically, the cloning agent 24 will consist of code stored on non-volatile storage 320 (e.g., one or more magnetic disks and/or one or more solid-state drives) and executable by at least one processor 302 in concert with volatile storage (RAM) 304 of the computer system 300. The cloning agent 24 may be configured to send queries to, and receive responses from, a remotely located database server via a communications interface 306 of the computer system 300. In some embodiments, the cloning agent 24 may be realised as dedicated hardware, such as one or more application-specific integrated circuits (ASICs), field-programmable gate array (FPGAs), or other integrated circuit device embodying logic for implementing the functionality of the cloning agent 24, or may comprise a combination of software and hardware.

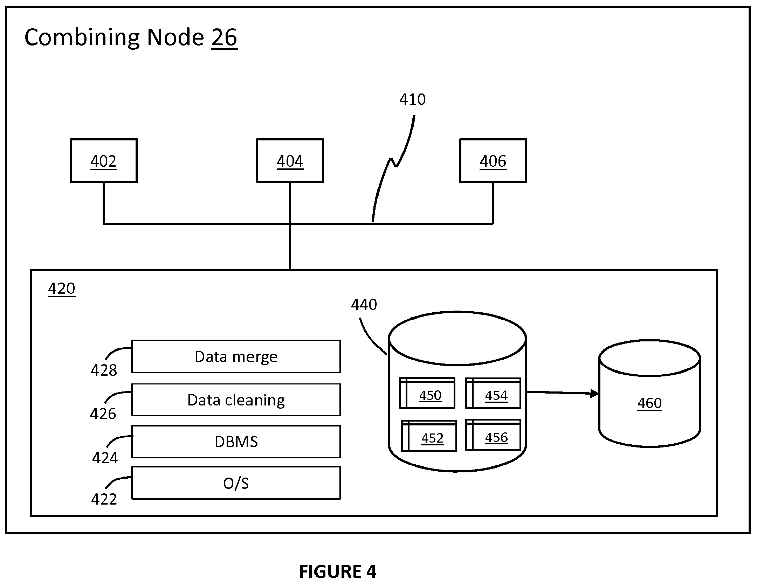

Turning to Figure 4, an exemplary architecture of a combining node 26 is shown. The combining node 26 comprises at least one processor 402, volatile storage (RAM) 404, at least one network interface 406, and non-volatile storage (e.g., one or more magnetic disks and/or one or more solid-state drives) 420, all interconnected by a bus 410. The non-volatile storage 420 has stored thereon a plurality of modules, including operating system 422, database management system (DBMS) 424, data cleaning module 426, and data merge module 428. Although these are depicted as software modules in Figure 4, it will be appreciated that the term "module", as used throughout this specification, may encompass hardware, software, or a combination of hardware and software. Similarly, as used herein, the term "component" refers to software, hardware, or a combination of the two. For example, any of the modules shown in Figure 4, or any other module or component referred to herein, may be implemented in whole or in part as one or more application-specific integrated circuits (ASICs), field-programmable gate array (FPGAs), or other integrated circuit device in which the logic embodied in the module or component is implemented. In addition, the boundaries between modules or components as depicted are exemplary only, and it would be possible to implement alternative modules which perform the functions of any two or more of the modules shown in Figure 4, for example.

In some embodiments, the cloning agent 24 and combining node 26 may be part of the same computer system. For example, the components of cloning agent 24 may form one or more of the modules stored on non-volatile storage 420.

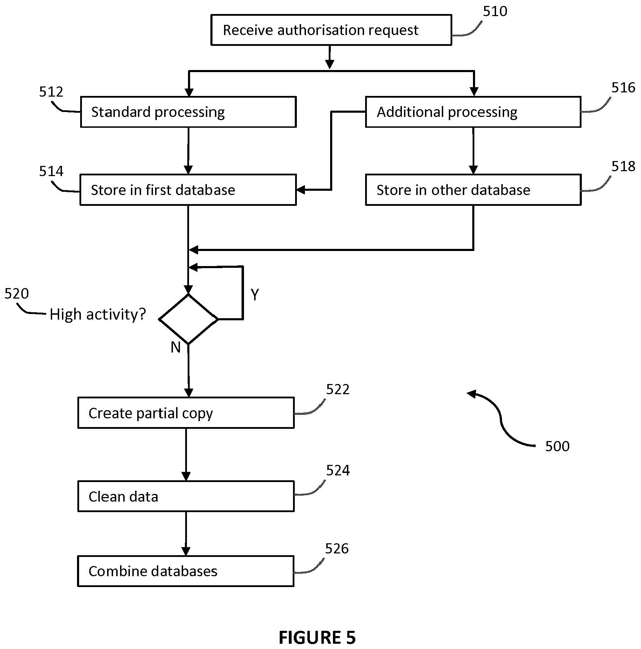

Figure 5 is a flow diagram showing steps that can be undertaken in an embodiment of the present invention. At step 510 an authorisation request message is received at a server of the network 12 from a point of interaction such as the point-of-sale terminal 4, or the merchant's website 8, typically via an acquirer processing system 20. The authorisation request message typically comprises data indicating that the transaction is to be processed in a particular way. For example, the authorisation request message may be an ISO 8583 message containing one or more data elements having one or more flags to indicate services (e.g. services 30, 32 or 40) which should be invoked by network 12 or issuer processing system 22 in addition to routine authorisation processing.

If no flags are present in the authorisation request message, or the authorisation request message otherwise indicates that standard processing is to take place (i.e., no additional services to be invoked), then standard processing takes place at 512, whereby the authorisation request is transmitted to issuer processing system 22, an authorisation response message is received by the network 12 from issuer processing system 22, and the completed transaction is then stored in the first database 16 at step 514. In these cases the stored data includes at least the payment account number (PAN), date, currency and transaction amount.

If the authorisation request message indicates that one or more additional services are to be invoked, then this is either done directly by the network 12, or by the issuer processing system 22, at step 516. For example, as mentioned above, RBD service 30 may be invoked if the authorisation request message originates from a merchant's website 8 that has RBD code 10 (or other services may be invoked as appropriate if CEM code or code associated with the other databases 42 is present). RBD service 30 may process the data in the authorisation request message to, for example, compute a risk score for the transaction and add this to the authorisation request message for transmission back to the network 12 or the issuer processing system 22. The issuer processing system 22 or the network 12 may use the risk score as an additional parameter for the purposes of approving or declining (and thereby completing) the transaction. As before, the result of the authorisation request is stored in the first database 16 (step 514). In addition, the transaction with the RBD processing result is stored in the RBD database 34 (or CEM or other database 36, 42) at step 518.

At step 520 the activity monitor 332 of cloning agent 24 analyses the level of activity in the first database 16. The first database 16 is typically arranged to store all transactions processed over the network 12, or less commonly, may be arranged to store transactions only for a particular client (e.g., specific acquirer or specific issuer). Thus, the first database 16 may be a very large data object and it typically increases in size with time. In some embodiments the first database 16 may include tens of thousands of new data entries, relating to transactions, per second. If a period of high activity is detected by activity monitor 332 then the cloning agent 24 takes no action. For example, activity monitor 332 may invoke database query component 330 at regular intervals, such as once per minute, to determine the number of transactions that have been written to the first database 16 since the last query (for example, based on transaction identifier, or some other indicator of transaction count). The threshold for high activity may be a certain number of transactions per second, such as more than 50 transactions per second, or more than 100 transactions per second, or more than 500 transactions per second.

It is considered important to preserve the integrity of the first database 16 during periods of high activity. Any additional processing on the first database 16 is considered undesirable during these periods, which may include evenings and the period from November through to January, which are typically busier in terms of number of transactions per unit time. If a period of lower activity (e.g., any value below the high activity threshold) is detected at step 520 then the cloning component 334 of cloning agent 24 creates a partial copy of the first database 16 and writes it to temporary database 350, at step 522.

In certain embodiments the cloning component 334 of cloning agent 24 creates a partial copy of the first database 16 by copying only data generated after a predetermined date. This may ensure that the partial copy is a manageable data size for further processing and can be handled with computational efficiency. Operating on a copy of the first database 16 is also desirable because it retains the integrity of the first database 16 itself. Step 522 may be undertaken repeatedly whereby the cloning agent 24 updates the partial copy to include newly generated data (i.e., all data written to first database 16 since the last partial copy). To this end, temporary database 350 may contain a table with at least the time stamp of the last partial copy, or may store the time stamp of each partial copy. This can ensure that the partial copy remains up to date.

At step 524 the DBMS module 424 of combining node 26 receives data from the temporary database 350 created by cloning agent 24, for example over network interface 406 if the cloning agent 24 is executing on a remote computer system, and data cleaning component 426 then cleans the data, for example by removing redundant entries and/or fields which are not needed for further analysis, and writes an output table 450 to database 440. The DBS module 424 may restrict the data retrieval to a specific date range.

Similarly, the combining node 26 may receive data from the other databases 34, 36, 42, via network interface 406 by DBMS module 424 making respective network connections with the corresponding database servers, and cleans the data, for example by selecting only the fields which are needed for further analysis. The cleaned data may be written to respective tables 452, 454, 456 of database 440 (or alternatively, may be written to separate databases, though it will typically be more efficient to manage the data as part of a single database 440). Thus, the combining node 26 can remove unnecessary or undesirable data in the interest of computational efficiency.

At step 526 the data merge module 428 of combining node 26 combines the cleaned data 450 from the first database 16 with the cleaned data 452 from the RDB database 34, the cleaned data 454 from the CEM database 36 and/or the cleaned data from other databases 42 in order to create a third transactional database 460 which contains combined data. To do this the data merge module 428 uses the primary account number as a surrogate key, and matches the transaction records from tables 450, 452, 454 and/or 456 by checking the time at which each event was processed. Additional fields which are common to respective pairs of tables or databases (such as transaction amount) may be used in the event of any ambiguity in the matching process, to reduce the risk of a spurious match.

The third transactional database 460 therefore generally includes a combination of data fields that cannot be found in any one of the other databases 16, 34, 36, 42. Data in the third transactional database 460 may be ordered by PAN and date.

The third transactional database 460, including combined data, can be used for deep analysis into patterns in the underlying data. For example, the third transactional database could be used to profile individuals or groups.

The skilled person will appreciate that a number of modifications to the above embodiments are possible. In particular, the methods and systems described above may be applied to many different data types, and are suitable for any context in which a single originating event is processed at multiple points in a network, and where it is desired to merge the processing results for later analysis.

## Claims

1. A method for enhancing analysis of transactional data, comprising the steps of:
processing first data relating to a transaction, and associated with a primary account number, PAN, and storing the first data in a first transactional database which is a live database;
processing second data relating to the transaction, and associated with the primary account number, PAN, and storing the second data in a second transactional database;
creating at least a partial copy of the first transactional database; and
combining at least part of the second transactional database and the at least partial copy of the first transactional databases to create a third transactional database which includes first and second data from the first and second transactional databases.

2. The method of claim 1 further comprising the step of identifying periods of high activity and low activity in the first transactional database.

3. The method of claim 2 wherein the step of creating the at least partial copy of the first transactional database is undertaken during a period of low activity.

4. The method of any of the preceding claims wherein the transaction is an online transaction.

5. The method of claim 4 wherein the online transaction is executed in an online domain associated with a third party, and wherein the online domain comprises an instruction for the second data to be processed.

6. The method of claim 5 wherein the second financial database is a risk based decisioning, RBD, database or a customer exposure monitoring, CEM, database.

7. The method of any of the preceding claims wherein the second transactional database includes data fields not present in the first transactional database.

8. The method of any of the preceding claims further comprising the step of cleaning the first or second transactional database before combining to remove data.

9. The method of any of the preceding claims further comprising the step of cleaning the third transactional database to remove data.

10. The method of any of the preceding claims wherein the step of creating at least a partial copy of the first transactional database involves copying data relating to transactions after a predetermined date.

11. The method of claim 10 further comprising the step of updating the partial copy of the first transactional database to include newly generated data.

12. A computer system for enhancing analysis of transactional data, the computer system comprising:
a first data handling system configured to process data relating to a transaction, and associated with a primary account number, PAN, and to store the data in a first transactional database which is a live database;
a second data handling system configured to process data relating to the transaction, and associated with the primary account number, PAN, and to store the data in a second transactional database;
a cloning agent configured to create at least a partial copy of the first transactional database; and
a combining node configured to combine data from at least part of the second transactional database and the at least partial copy of the first transactional databases to create a third transactional database which includes data from the first and second transactional databases.

13. A computer readable storage medium configured to store computer executable code that when executed by a computer configures the computer to:
process first data relating to a transaction, and associated with a primary account number, PAN, and to store the first data in a first transactional database which is a live database;
process second data relating to the transaction, and associated with the primary account number, PAN, and to store the second data in a second transactional database;
create at least a partial copy of the first transactional database;
combine at least part of the second transactional database and the at least partial copy of the first transactional databases to create a third transactional database which includes first and second data from the first and second transactional databases.
